**Europäisches Patentamt**

**European Patent Office**

**Office européen des brevets**

(19)

(11) Publication number : **0 654 652 A1**

# (12) EUROPEAN PATENT APPLICATION

(21) Application number : **94850195.2**

(22) Date of filing : **01.11.94**

(51) Int. Cl.⁶ : **G01B 11/26**

(30) Priority : **02.11.93 SE 9303611**

(43) Date of publication of application :
**24.05.95 Bulletin 95/21**

(84) Designated Contracting States :
**AT CH DE FR GB IT LI SE**

(71) Applicant : **LEINE & LINDE AB**
**Box 8**
**S-645 21 Strängnäs (SE)**

(72) Inventor : **Linde, Hendrik**
**Box 8**
**S-645 21 Strangnas (SE)**

(74) Representative : **Hammar, Ernst et al**
**H. Albihns Patentbyra AB,**
**P.O. Box 3137**
**S-103 62 Stockholm (SE)**

(54) **Encoder unit.**

(57)    Process in an encoder unit comprising a code means (30) provided with a pattern and a detector means (40) as well as an encoder unit for carrying out the process. The detector means (40) and the code means (30) are displaceable relative to each other, and the process comprises the step of generating a measurement code signal (84,d1-d12) indicating the position of the code means (30) relative to the detector means (40) with a certain inaccuracy. The process further comprises the steps of reading at least one bit track (Ta1 ; Td1) on the code means (30) and generating an accessory code signal (86) comprising at least one accuracy bit signal (ia1) with a first significance, signal edges for the accessory code signal (86,ia1,ia3,ia6) occurring at approximately the same position as signal edges of bit signals (d2-d12) in the measurement code signal (84,d1-d12) ;
and combining the measurement code signal (84) and the accessory code signal (86), thus providing a code signal (45 ;84,86) with an accuracy redundance. As a function of the code signal (45), an absolute position signal (75,b1-b12) is generated, which indicates the absolute position of the code means relative to the detector means (40).

FIG.1

Encoder Unit

The present invention relates to a process of the type described in the preamble to claim 1, and a device for carrying out said process.

Background of the invention

Electro-optical encoders for indicating angular position can comprise an encoder disc with a pattern which can be read optically. The pattern on the disc is read by one or more detectors, each of which emits an electrical signal related to the angular displacement or rotation of the encoder disc.

The encoder disc can be either an absolute encoder disc or an incremental encoder disc. An incremental encoder disc is provided with a periodic pattern, e.g. a plurality of light and dark areas of equal size. When the incremental encoder disc is rotated, the transition between dark and light areas can be detected and thus a change in the angular position. An absolute encoder disc, however, is provided with a pattern which is unique for each angular position. Thus, when an absolute encoder disc is read, the absolute angular position of the encoder disc can be determined. The pattern on the absolute encoder disc comprises alternating light and dark areas which provide information concerning values in a signal which is fed from a detector means which reads the pattern on the absolute encoder disc.

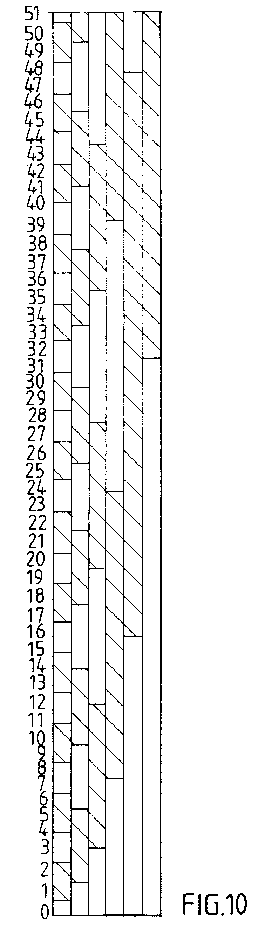

The absolute encoder disc thus comprises a plurality of groups of patterns, where each group corresponds to a certain bit such as d1, d2 etc, in the code signal which is generated by the sensor means. Each pattern group is read by a separate detector element. In order to obtain a certain accuracy in the code signal generated, according to a known technology, the reading of each pattern group must be of the same accuracy. That is to say, in order to be able to determine for example when a change has occurred in the detector reading the most significant bit, also called the msb-detector, the msb-detector must produce its signal with the same accuracy as the accuracy when reading the least significant bit (lsb). An example of a code means with a pattern for reading the absolute position according to known technology is shown in Figure 10.

A problem of the known technology is that in order to increase the resolution of the code signal, the accuracy in reading the pattern must also be correspondingly increased. This increased accuracy requirement is placed on the reading of all the pattern groups, i.e. both the msb group and the 1sb group and the pattern groups of intermediate significance.

An additional problem is that increased accuracy requires that the window through which a detector element observes "its" pattern group must be smaller, which means that the change in light intensity, which the detector element senses when the pattern changes from a dark area to a light area, will be less. This means in other words that the signal levels, with which one must work, will be weaker and this will negatively affect the signal/noise ratio and the disturbance sensibility. Increasing the accuracy by a factor of 2 can reduce the signal level by about half as a result of the reduction in the light strength. One method of solving the last mentioned problem according to the known technology is to arrange a plurality of detector elements in such a manner that they read simultaneously the same pattern group and generate a plurality of signals lying in phase with each other and which can cooperate to provide a stronger signal level in the code signal. This has, however, the disadvantage that it requires mounting of a number of detector elements with high accuracy, which makes manufacture more complex and increases manufacturing costs.

In the article "New developments in Optical Shaft-angle Encoder Design" which was published in The Marconi Review, first Quarter 1983, a known technology is described, called Vee-scan. According to the Vee-scan technology, an absolute position signal is provided by placing two detector elements for reading each bit pattern group, and the tolerance for placement of the detector element is higher for reading bit pattern tracks of higher significance. One problem with this known technology is that it requires at least two detector elements for each bit pattern track, which means that such an encoder unit must have at least 24 electro-optical detector elements to provide an absolute position signal with 12 bit resolution. Since the electro-optical detector elements are amongst the most expensive and most sensitive components in an encoder unit, it is desirable to keep the number of such components low.

According to known technology, a window element can be arranged between the detector element and the encoder disc so that the detector element can observe a number of openings in the same bit track of the encoder disc and thus produce a stronger signal. One problem according to the known technology is that the window element between a detector element and the encoder disc must be mounted very close to the moving encoder disc so that the detector element will not be disturbed by adjacent bit tracks. The very narrow gap between the moving encoder disc and the window element means that there will be a risk of them hitting each other if the encoder is subjected to jolts and if the gap is too small. Usually, the encoder disc and the window element are mounted so that the distance between them is the same as the line width of the pattern of the least significant bit.

## The purpose of the present invention

The main purpose of the present invention is to achieve a process for simply generating an absolute position signal with great accuracy.

An additional purpose of the present invention is to achieve a sensor unit which provides in a simple manner an absolute position signal with great accuracy.

An additional purpose of the present invention is to achieve a sensor unit which provides an absolute position signal of great accuracy with a small number of detector elements.

An additional purpose of the present invention is to achieve a code means comprising accuracy pattern groups which can be used to provide an absolute position signal with accuracy redundance and very great accuracy.

An additional purpose of the present invention is to achieve logic means for processing a code signal delivered from a detector means, said logic means weighing together the bit signal values in the code signal and producing an absolute position signal comprising a number of bit signals with a accuracy corresponding to the most precise bit signal of the code signal.

These and other purposes, as will be evident from the description below, are achieved according to the invention with a process, of the type described in the preamble to claim 1, which has the characterizing features disclosed in claim 1. Further features and developments of the process according to the invention, and a device for carrying out the process, are disclosed in the rest of the claims.

## Short description of the drawings

For simple understanding of the present invention, it will be described by means of examples and with reference to the accompanying drawings, of which

Figure 1 shows a schematic block diagram of a first embodiment of an electro-optical encoder 10 according to the invention,

Figure 2 is a diagram illustrating the principle of an absolute position pattern according to one embodiment of the invention,

Figure 3 shows examples of bit signals which can be delivered from a detector means in an encoder unit according to one embodiment of the invention,

Figure 4 illustrates that the position of the signal changes, or edges, of an accuracy signal can be used to generate edges of the encoder unit's output signal bit values,

Figure 5A shows a block diagram of a logic means for the embodiment described in connection with Figure 1,

Figure 5B illustrates how an output signal bit b2 is generated as a function of a number of code signal bits,

Figures 6, 7 and 8 illustrate the reading of a bit pattern group according to one embodiment of the invention,

Figure 9 shows an encoding means and a detector means according to one embodiment according to the invention,

Figure 10 shows an absolute position pattern according to known technology.

## Description of embodiments of the invention

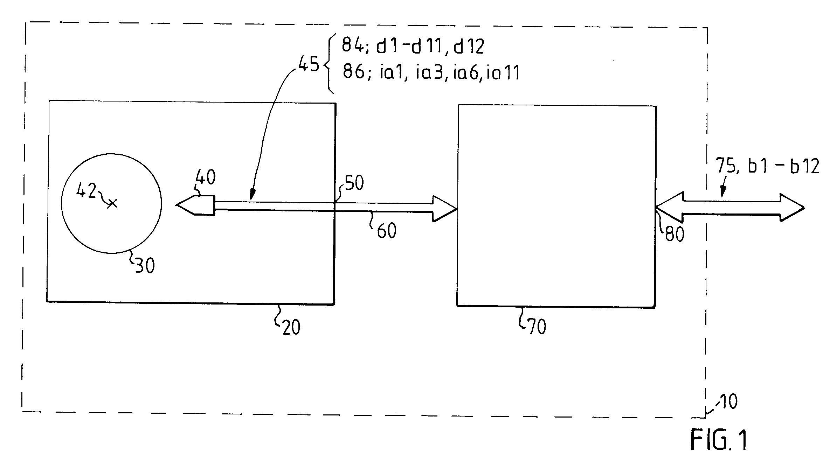

Figure 1 shows a schematic block diagram of a first embodiment of an electro-optical encoder 10 according to the invention. The encoder 10 comprises an encoder unit 20, which in turn can comprise a code means 30 and a detector means 40. The detector means 40 and the code means 30 are displaceable relative to each other. The code means 30 can consist of an encoder disc with a pattern which can be read as an absolute position, which will be described in more detail below. According to a first embodiment of the invention, the encoder 10 is an absolute angle sensor, and the code means 30 consists of an encoder disc, which is displaceable relative to the detector means 40 about an axis of rotation 42.

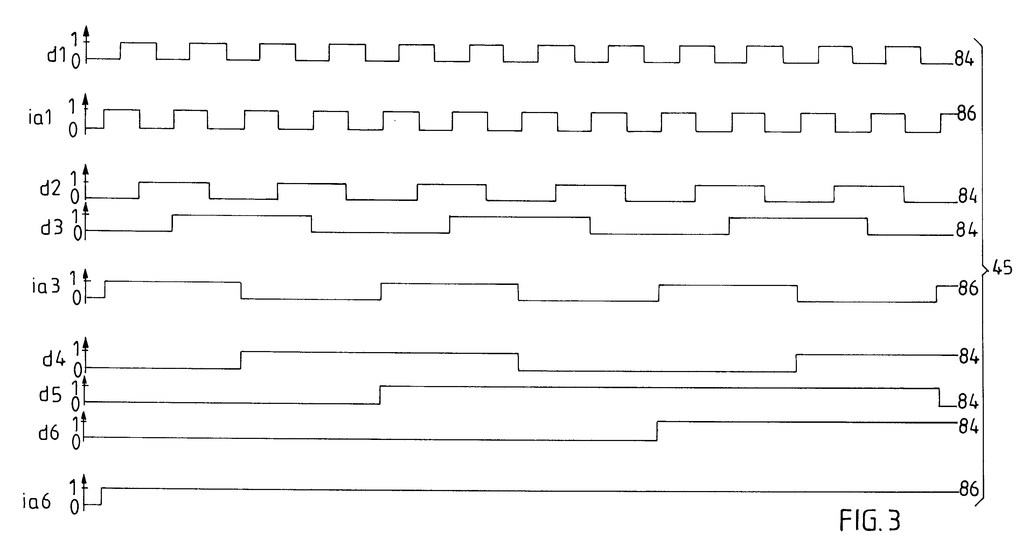

The detector means 40, which can comprise a number of detector elements, can generate a code signal 45 (Figures 1 and 3) and feed said signal via an output 50 in the encoder unit 20. The output 50 can be connected via a signal bus 60 to a logic means 70.

The logic means is disposed to carry out certain predetermined logical operations on the code signal bits and the code signal 45 and, depending on the signal state in the code signal, to generate a position signal 75, and feed out the position signal 75 via an output 80 in the logic means 70. The position signal 75 is an absolute position signal which can be coded with Gray-code.

In order to obtain high accuracy in the position signal 75 in a simple and inexpensive manner, one embodiment of the invention comprises a combination of a new code pattern in the code means 30 and a new logic process for treating the code signal 45 obtained from the encoder unit 20.

Figures 2 and 3

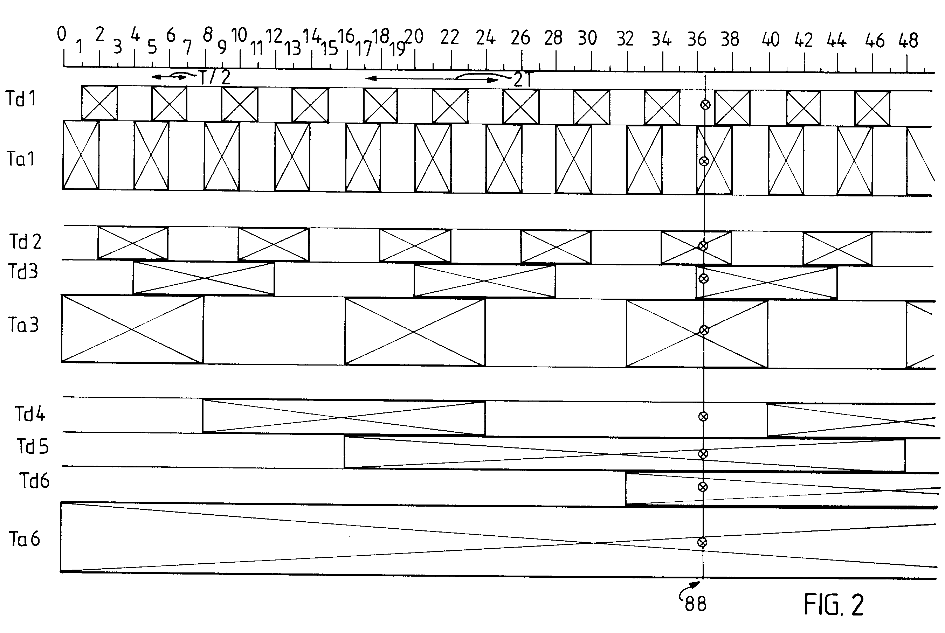

The code means 30 can for example comprise eleven bit pattern groups or bit pattern tracks, Td1-Td11 (Fig 2), which are arranged so that they form a Gray-code pattern or the like. The detector means 40 comprises a detector element for each bit pattern track Td1-Td11, and delivers the corresponding eleven digital code signal bits d1, d2, d3, d4, d5, d6, d7, d8, d9, d10 and d11, which constitute bits in a measuring code signal 84 (Fig 3). The measuring code signal can thus be Gray-coded. A measured value coded in Gray-code is unambiguously interpretable without redundancy.

The code means 30, according to one embodiment of the invention, further comprises four accuracy pattern tracks Ta1, Ta3, Ta6 and Ta11, and the detector means 40 comprises a detector element for reading each accuracy pattern track. The detector means 40 can thus deliver accuracy bit signals ia1, ia3, ia6 and ia11, the values of which correspond to the accuracy pattern tracks Ta1, Ta3, Ta6 and Ta11. The accuracy bit signals ia1, ia3, ia6 and ia11 thus constitute an accessory code signal 86. The code signal 45 delivered from the detector means 40 thus comprises, on the one hand, the Gray-coded measuring code signal 84, and, on the other hand, the accessory code signal 86, and therefore there is redundancy in the code signal 45, as will be evident from the following description.

The least significant bit d1 can have the finest divisions and the bit d11 can have the coarsest divisions. A combination of the measuring code bits d1 - d11 with the accuracy signal ia11 constitutes, according to one embodiment of the invention, a Gray-coded measuring code signal 84, where ia11 is the most significant bit. The bit ia11 can then have the same divisions as the measuring code bit d11, but be phased approximately 90° from d11. The bit signals d1 - d11 and ia11 can then be interpreted as a Gray-coded measuring signal with twelve bit signals d1 - d12, where d12 = ia11.

It is also possible within the scope of the invention to arrange another number of pattern tracks on the code means than the number disclosed in this embodiment.

Figure 2 shows the principle for an absolute position pattern according to one embodiment of the invention. In order to simplify the Figure and facilitate understanding of the invention, Figure 2 only shows a portion of a complete absolute position pattern. Figure 2 shows the bit pattern tracks Td1 - Td6 and Ta1, Ta3 and Ta6. The Figure shows the portion of the position scale corresponding to the position number values 0 to 48.

Figure 2 shows a code pattern for a rectilinear surface, but the corresponding pattern can of course be arranged on a circular encoding disc to achieve for example an absolute angle sensor.

The twelve bit pattern groups Td1 - Td11 and Ta11 for the position bits d1 - d12 correspond to bit patterns of an absolute code means with Gray-code according to the known technology. The fact that the twelve position pattern groups are arranged so that the twelve position bits d1 - d12 are coded in Gray-code means that only one position bit at a time changes signal value upon relative displacement between the code means 30 and the detector means 40 (Figs 1, 2 and 3). The measuring code signal 84 is thus unambiguous and without redundance.

The first accuracy pattern track Ta1, which gives rise to the accuracy bit signal ia1, comprises just as many dark and light areas as does the pattern track Td1. The first accuracy pattern track Ta1 is displaced relative to the pattern track Td1 so that the bit signal ia1 is phased 90° from the bit signal d1 (see Figs 2 and 3). This has the effect that when any of the bits d2 - d12 has a signal edge, the accuracy bit ia1 also has a signal edge at approximately the same time. The edges of the measuring code bits d2 - d12 can then be allowed to be generated with greater inaccuracy than the edges of accuracy bit ia1. This means that the measuring code bits provide information that the absolute position is within a first inaccuracy range, and that an edge of the accessory code bit signal provides a closer position determination within this inaccuracy range. In this way, a code signal 45 is obtained which is accuracy redundant and unambiguously interpretable. By using these relationships to determine exactly when the edge actually should arrive for bits d2 - d11, the reading accuracy can be lower for bits d2 - d11 and still obtain a positional value 75 (Fig 1), the inaccuracy of which is only limited by the inaccuracy of the reading of the bit pattern tracks Td1 and Ta1. It is thus possible to provide a positional sensor 10 with high resolution and small inaccuracy in the position signal 75 without having to read each bit pattern track Td1 - Td11 with the same high accuracy.

The detector means can comprise a detector element for each pattern group and these detector elements can be arranged essentially along a line 88, as marked in Figure 2, to read off the pattern groups and generate the code signal 45.

It is also within the scope of the invention to place the detector element for the pattern group Td3, for example, spaced from the line 88, said spacing corresponding with a multiple of one period, $N * 2\pi$, in the pattern group Td3. According to one embodiment of the invention, the detector elements for the bit signals d1, d2, d3 and ia1 and ia3 are arranged in a first detector element group while the detector elements for the bit signals d4, d5, d6 and ia6 are arranged in a second detector element group and the detector elements for the bit signals d7 - d11 and ia11 are arranged in a third detector element group.

The fact that the measuring code pattern Td1 - Td11 is arranged in a Gray-code means that each time there is a change in the measuring code signal 84, there is only one of the code signal patterns Td1 - Td11 within the area where there is any uncertainty as to the value (1 or 0) of the signal bit in question (d1 - d11). This uncertainty can arise due to the fact that a window through which a detector element observes the bit pattern in question must have a certain geometric width, which will be described in more detail below with reference to Figure 7. During the time when this window passes over a pattern edge, there is uncertainty as to whether the corresponding bit signal shall assume the value 1 or 0. Another cause for uncertainty is inaccuracy in assembling and mounting the corresponding detector elements in the encoder unit. By utilizing the redundance provided by the accessory code signal, the correct values for the absolute position signal 75 can be determined with the same inaccuracy as the accuracy pattern Ta1 is read. The bit output signals b1 - b12 can thus be determined with the same accuracy as the signals d1 och ia1.

The least significant bit signal b1 in the position signal 75 follows the least significant bit signal d1 of the code signal 45. The edges of the bit signal b1 are generated to be directly dependent on the edges of the bit signal d1, or in a logical expression b1 = d1.

The signal ia1 is the most accurate accuracy signal and is also labelled oa1 for reasons to be explained below.

Figure 4

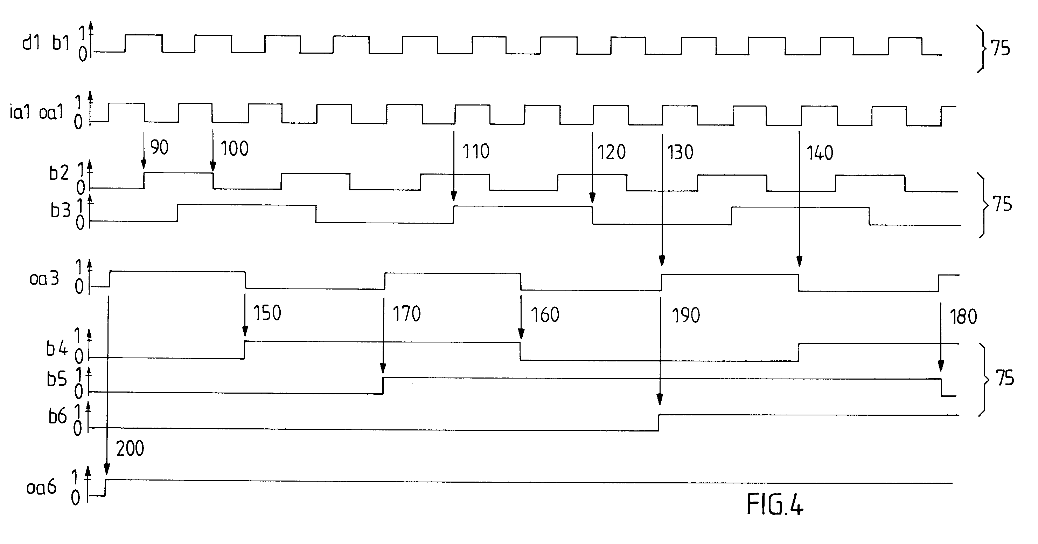

Figure 4 shows the bit signals b1, b2, b3 as well as b4, b5 and b6 in the position signal 75 as well as the accuracy bit oa1 = ia1 and two accuracy bits oa3 and oa6. In Figure 4, the arrows 90 and 100 illustrate that every other edge of the signal ia1 is used to determine each edge of the bit signal b2. Furthermore it can be seen that every fourth edge of the signal ia1 can be used to determine each edge of the signal b3, as is illustrated with the arrows 110 and 120.

Every fourth edge of the accuracy bit signal ia1 can in turn be used to determine each edge of the accuracy bit signal oa3. The accuracy bit signal oa3 corresponds to the accuracy bit signal ia3 but the edges of the accuracy bit signal oa3 are generated as a function of the edges of the accuracy bit signal ia1, as is illustrated by the arrows 130 and 140 in Figure 4. The accuracy signal oa3 can be phased 90° relative to the measuring bit signal d3. This means that the accuracy signal oa3 can be used as an additional accessory measuring value to determine when the edges of the bit signals b4 - b12 should be generated. This is illustrated in Figure 4 by means of the arrows 150 and 160, which show that each edge of the signal b4 should come simultaneously with every other edge of the accuracy bit signal oa3. Furthermore, the arrows 170 and 180 in Figure 4 show that each edge of the signal b5 should arrive at the same time as every fourth edge of the signal oa3. The arrow 190 illustrates that each edge of the bit signal b6 should arrive at the same time as every eighth edge of the accuracy bit signal oa3. The accuracy bit signal oa6 corresponds to the accuracy bit signal ia6 and, in a manner corresponding to that described above, the edges of the accuracy bit signal oa6 can be determined as a function of every eighth edge of the accuracy signal oa3 as is illustrated by the arrow 200.

The logical operations for determining the positions of the edges in the digital position signal 75 can be performed by means of the logic means 70 which is shown in Figure 1. The position signal 75 can comprise as many bits b1 - b12 as there are measuring bits (d1 - d12) in the code signal 45.

In the following logical expressions, the character "/" means "NOT", i.e. logical inversion of the value thereafter. The value of the next to the least significant bit signal b2 of the position signal 75 can be determined by the following logical expression:

```
b2 =   /ia3 *  /d3 * b1 *   oa1        (201)

     + /ia3 *   d3 * b1 *  /oa1        (202)

     +  ia3 *   d3 * b1 *   oa1        (203)

     +  ia3 *  /d3 * b1 *  /oa1        (204)

     +  d2  *  /b1                     (205)
```

The value of the bit signal b2 can thus depend on the measuring bits d1, d2 and d3 and the accuracy bits oa1 and ia3.

The value of the bit signal b3 of the position signal 75 can be determined by the following logical expression:

```
b3 =    /ia3 *  d2 * /b1 * /oa1
      +  ia3 *  d2 * /b1 *  oa1
      +  d3  * /d2
      +  d3  *  b1
```

Thus, the value of the bit signal b3 can depend on the measuring bits d1, d2 and d3 and the accuracy bits oa1 and ia3.

As was mentioned above, the logic means 70 can generate a second order accuracy bit signal oa3 with the same significance as the accuracy bit signal ia3. Analogously to the position bit signal b3, the value of the second order accuracy bit signal oa3 is dependent on the measuring bits d1, d2 and d3 delivered by the detector means 40 and the accuracy bits ia1 and ia3 also delivered by the detector means 40. The value of the accuracy bit signal oa3 generated by the logic means 70 can be determined by the following logical expression:

```
oa3 =    /d3  * /d2 * /b1 *  oa1
       +  d3  * /d2 * /b1 * /oa1
       +  ia3 *  d2
       +  ia3 *  b1
```

The above described accuracy bit signal oa3 has its signal edges synchronized with every fourth edge of the bit signal ia1. This means that the value of the accuracy bit signal oa3 is determined with the same high accuracy as the value of signals ia1 and d1. The logical expressions for the other bit signals are given in Appendix 1.

Figure 5A

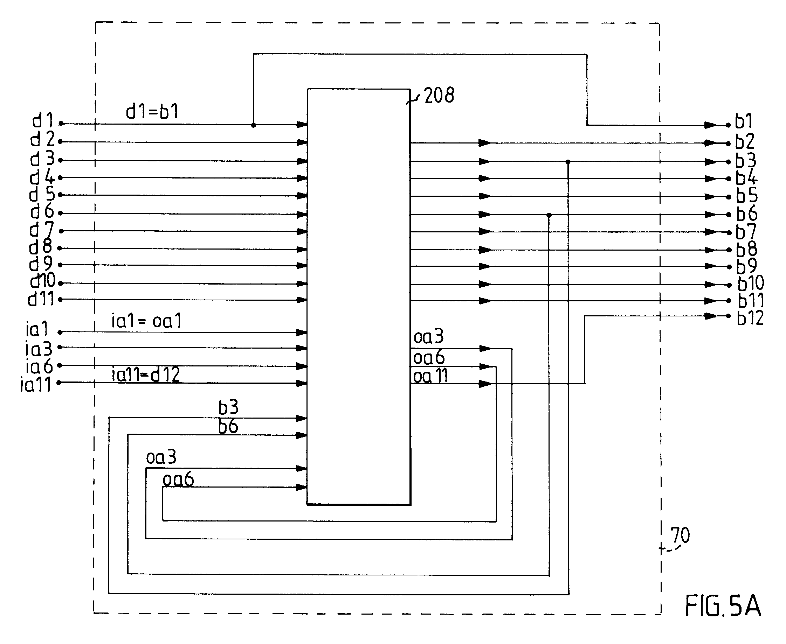

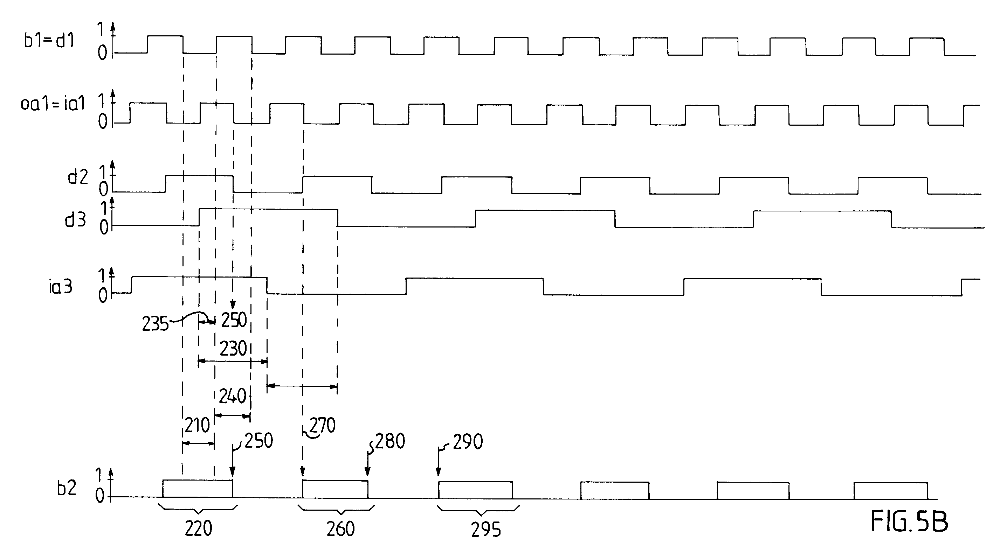

The logic means 70 according to the embodiment shown in Figure 1, is shown in Figure 5A. The eleven measuring code bit signals d1 - d11 and the four accuracy bit signals ia1, ia3, ia6 and ia11 are delivered to the logic means 70. These fifteen input signals are delivered to a logic unit 208 which can comprise a number of OR-gates and a number of NAND-gates which are connected in accordance with the logical expressions given above. According to a second embodiment, the logic unit 208 comprises programmable logic circuits. As is evident from the logical expressions given, the logic unit can generate, depending on the input signals, the output signals b1 - b12 and second order accuracy signals oa3 and oa6. The signal outputs from the logic unit, which deliver the accuracy signals oa3 and oa6 and the output signals b3 and b6 are each connected to inputs to the logic unit 208. As is evident from the logical expressions given, the signals oa3, oa6, b3 and b6 are used to generate certain of the other output signals.

In the following, a few general logical expressions will be described, which apply to the logical expressions according to some of the embodiments of the invention. For the following general logical expressions, the following definitions apply:

n = significance for the signal the logical expression of which is to be determined

$P^-$ = significance $P^-$ for the accuracy signal oa($P^-$) which has the next lower significance than n

$P^+$ = significance $P^+$ for the accuracy signal ia($P^+$) which has the next higher significance or which has the same significance as the bit signal b(n) the logical expression of which is to be determined

f = the number of terms in the edge zone expression

N = the highest significance of the output signal 75.

The following applies for the logical expressions of the accuracy signals, for n > 1:

$$oa(n) = oa(P^-) * /b(P^-) * \prod_{r=1+P^-}^{r=P^+} /d(r)$$

$$+ /oa(P^-) * /b(P^-) \prod_{r=1+P^-}^{r=P^+-1} /d(r) * d(P^+)$$

$$+ ia(n) * \left[ b(P^-) + \sum_{r=P^-+1}^{r=n-1} d(r) \right]$$

In the embodiment described with reference to Figure 1, the above general formula applies for n = 3, 6 and 11, i.e. for the accuracy bit signals oa3, oa6 and oa11 = b12.

For the least significant accuracy signal oa(n=1) the following applies: oa(n=1) = ia(n=1).

The logical expression for a bit signal b(n) can be composed, on the one hand, of an edge zone expression and, on the other hand, of a flat zone expression. In the expression described above for the bit signal b(2), the edge zone expression consists of the terms (201), (202), (203) and (204). The edge zone expression comprises the terms which generate the edges of the output signal bn.

The flat zone expression comprises the terms which do not generate any edge of the output signal bn. The flat zone expression for the bit output signal b(n) with the significance n consists of a number of terms where the measuring code bit d(n) is included. The partial expression (205) constitutes the entire flat zone expression for the bit signal b2.

The edge zone expression can consist of a number of terms where the accuracy signal is included in each term. It is one of the terms in the edge zone expression which generates a edge in the bit signal b(n).

The following applies for the bit signal b(n) with n = N:
$$b(N) = oa(N - 1)$$
In the embodiment which is described with reference to Figure 1, N = 12 and thus b12 = oa11.

For the lowest significance n = 1, b1 = d1.

A logical expression for the bit output signal b(n) for the other values of n can be obtained as a sum of an edge zone expression Fb(n) and a flat zone expression Sb(n):
$$b(n) = Fb(n) + Sb(n)$$
For the flat zone expression with n = P^- + 1 and n < N, the following applies:
$$Sb(n) = d(n) * /b(P^-)$$
In the embodiment described, the following general formula applies for n = 2, 4 and 7.

For the flat zone expression with N > n > 1 + P^-, the following applies:

$$Sb(n) = d(n) * /d(n-1)$$

$$+ d(n) * \sum_{r=1+P^-}^{r=n-2} d(r)$$

$$+ d(n) * b(P^-)$$

In the embodiment described, the following general formula applies for n = 3, 5, 6, 8, 9, 10 and 11.

In each edge zone expression Fb(n) with significance n > 1 and n < N, f terms are included where $f = 2^t$, where $t = 1 + P^+ - n$.

Thus, the edge zone expression for example for the bit b5 consists of four terms, as can be derived from the fact that $t(n=5) = 1 + P^+ - n = 1 + 6 - 5 = 2$, and that $f(n=5) = 2^t = 2^2 = 4$.

Each term in the edge zone expression Fb(n) contains K factors, where $K = 2 + P^+ - P^-$. Each factor consists of a bit signal value such as, for example, d4 or b3 or oa3.

Each term in the edge zone expression Fb(n) contains the same bit signals but each term has a unique combination of inverted and non-inverted bit signals.

The following general formula states which bit signals are included in each term in the edge zone expression Fb(n):

$$oa(P^-) \ * \ b(P^-) \ * \ \prod_{\substack{r=1+P^- \\ r \neq n}}^{r=P^+} d(r) \ * \ ia(P^+)$$

The edge zone expression for the bit signal b(n) with significance n contains f terms.

Since the complete logical expression for a large number of bit signals has been given in this description and the attached Appendix, we will not weigh down this text with further description of these general expressions.

## Figure 5B

The following analysis of the logical expression described above for the bit signal b2 illustrates how the accuracy of the edge of the bit signal ia1 is transferred to the value of the bit signal b2. In Figure 5B, the signals b1, d2 and d3 as well as ia1 and ia3 are shown, which affect the decision concerning the value of the signal b2. The logical expression for b2 can comprise five partial expressions, which are linked together with OR-functions as shown above. The partial expression 205 shows that when b1 is low, the value of b2 can follow the value of d2 as illustrated at 210 in Figure 5B.

Figure 5B shows a pulse 220 in the bit signal b2. The negative edge of the pulse 220 is determined by the partial expression 203:

$$ia3 \ * \ d3 \ * \ b1 \ * \ oa1 \quad (203)$$

The logical expression ia3 * d3 is logically 1 in the range labelled 230 in Figure 5B. This range 230 overlaps the portion 235 of the range 210. By multiplying by the logical value bl, the range 240 is obtained, within which range the negative edge of the pulse 220 must be. The range 240 is the range where the expression

$$ia3 \ * \ d3 \ * \ b1$$

has the logical value 1.

When the expression ia3 * d3 * b1 is multiplied by the logical value ia1, the position 250 is obtained for the negative edge for the pulse 220 of the bit signal b2.

It should be pointed out that the edge of the output signal b2 is obtained by a logical operation on the accuracy bit signal with the next lower significance oa1 and the accuracy signal with the next higher significance ia3 and the measurement code signal d3, but not d2. The edge of the output signal b2 is thus determined independently of the edge of the input signal d2. The negative edge of the input signal d2 may occur anywhere within the range 240, and due to the logical signal processing, the negative edge of the output signal b2 will be generated at the position 250.

The partial expression 202

$$/ia3 \ * \ d3 \ * \ b1 \ * \ /oa1$$

determines in a corresponding manner where the positive edge of the subsequent pulse 260 is to be, as is illustrated by the arrow 270. The logically low value of the bit signal b2 midway between the edges 250 and 270 is determined by the logically low value of d1 in the first four logical partial expressions 201, 202, 203, 204, and by the logically low value of d2 in the fifth partial expression 205.

The negative edge of the pulse 260 can be determined by the logical expression

$$/ia1 \ * \ /d3 \ * \ b1 \ * \ oa1$$

and this logical expression changes from the logical value 1 to the logical value 0 at the arrow 280 in Figure 5B.

The logical partial expression 204 can analogously to the above determine the placement of the positive edge 290 of the next pulse 295 in the bit signal b2.

With the aid of the above analysis, it will be understood that the signals b3 and oa3 can be determined in a similar manner from the above stated logical expressions. Furthermore, it will be understood that since the edges of the signal oa3 have the same accuracy as the edges of the bit signal oa1, the signal oa3 can be used to determine the edges of the bit signals b4, b5, b6 and oa6 in accordance with the logical expressions given above, and these will also have the same accuracy as the bit signal oa1.

It will be understood herefrom as well that the accuracy requirement for the edges of the bit signals d2, d3, d4, d5, d6, d7, d8, d9, d10 and d11 will be lower for each additional accuracy bit signal ia1, ia3, ia6 which is included in the logical expression for computing the corresponding position bit signals b2 - b12.

The range 240 described above is thus the tolerance range within which the negative edge for the signal d2 can vary without affecting the corresponding edge of the position bit signal b2 in an ideal case with exact detection of the edges for d1 and ia1. It will thus be understood that the tolerance L, within which the detector means for the signal d2, in the ideal case, must generate a signal edge, is a tolerance corresponding to the distance T/2 marked in Figure 2.

Tolerance means the interval within which an edge can be allowed to fall without having to discard the sensor unit. Inaccuracy, on the other hand, refers to the actual deviation of an edge position relative to a theoretically perfect placement.

The tolerance $L_1$ is thus equal to the distance between two consecutive edges of the pattern Td1 if the pattern Td1 is read exactly. Usually the pattern Td1 consists of light and dark areas of equal size and in this case the tolerance $L_1$, in the ideal case, is equal to the distance for a half period T of the bit pattern Td1.

The detector means for the bit pattern Td3 and Ta3 can thus be allowed to detect corresponding bit signal edges within the tolerance $L_1$ without affecting the inaccuracy of the corresponding signals b3 or oa3.

From the above it will be understood that the detector means for the bit patterns Td4, Td5, Td6 and Ta6 can be allowed to detect corresponding bit signal edges within a tolerance $L_3$ without affecting negatively the inaccuracy in the edge position of the corresponding signals b4, b5, b6 and oa6, since these edge positions can be determined with the aid of the two accuracy signals ia1 and ia3. $L_3 = 2T$ is equal to the distance between two edges of the pattern Ta3.

The tolerance requirements for detecting bit patterns in an absolute position encoder according to the above described embodiment of the invention is, in the ideal case, with exact detection of the edges for d1 and ia1, as follows:

| Detection of bit track | Tolerance requirements according to one embodiment of the invention |
|---|---|
| Td2 | $L1 = T/2$ |
| Td3 | $L1$ |
| Ta3 | $L1$ |
| Td4 | $L_3 = 2T$ |
| Td5 | $L_3 = 2T$ |
| Td6 | $L_3 = 2T$ |
| Ta6 | $L_3 = 2T$ |
| Td7 | $L_6 = L1 * 2^5 = (T/2) * 32 = 16T$ |
| Td8 | $L_6$ |
| Td9 | $L_6$ |
| Td10 | $L_6$ |
| Td11 | $L_6$ |
| Ta11 | $L_6$ |

The inaccuracy $\alpha$ in the position measuring value 75 (Fig 1) delivered from the encoder 10, thus depends on the imprecision with which the bit signals d1 and oa1 are read. The inaccuracy $\alpha$ of the measured value 75 can depend on the following components:

$\alpha_m$ = the inaccuracy corresponding to the inaccuracy in the placement of the window element or the detector means in the encoder unit 20.

$\alpha_{d1}$ = the inaccuracy obtained in optical detection of an edge of the bit pattern Td1 or the bit pattern Ta1.

$\alpha_{d2}$ = the inaccuracy which is possibly obtained in the signal treatment of the detected bit signals.

Figures 6, 7 and 8

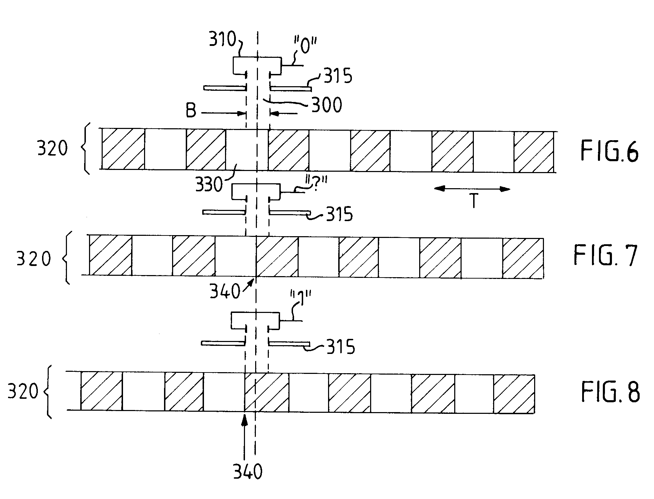

Figure 6 shows a detector means 310 and a window element 315, which is provided with a window 300. As can be seen in the Figures 6, 7 and 8, the inaccuracy $\alpha_{d1}$ can depend on the width B of the window 300 through which the detector element 310 observes a pattern track 320. The pattern track 320 shown in Figures 6, 7 and 8 can be, for example, the pattern track Td1 shown in Figure 2.

When the pattern track 320 is in the position shown in Figure 6, the detector element 310 observes a light section 330 through the window 300, and the detector element can then deliver a logical value "zero".

Figure 7 illustrates that the pattern track 320 has been displaced somewhat relative to the position in Figure 6 so that a pattern edge 340 is directly in front of the window 300 of the detector element, giving rise to uncertainty as to whether the detector element 310 is delivering a logical value "one" or "zero".

Figure 8 illustrates the situation where the pattern track 320 has been further displaced and the edge 340 has passed the window 300 and the detector element 310 delivers a logical value "one".

The lower tolerance requirement for reading the more significant measuring code bits d2 - d11 makes it possible to allow the window 300 to be larger for the detector elements reading the more significant bit tracks Td2 - Td11.

By using the above described process to process the logical bit signals d1 - d11 and the accuracy signals ia1, ia3, ia6 and ia11, a measurement value 75 with very little inaccuracy $\alpha$ is obtained even if only the least significant bit d1 of the measuring code signal 84 and the accuracy bit signal ia1 are detected with little inaccuracy $\alpha$. According to the above described embodiment of the invention, it is thus sufficient if the bit signal d7 and the more significant bit signals d8 - d11 and ia11 are detected within the tolerance range 16T for the encoder unit 10 to deliver an output signal value 75 with an inaccuracy which is equal to the inaccuracy of the least significant bit signal d1.

By virtue of the process described above for processing the logical measuring code signals d1 - d11, it is possible to use only one detector element per bit output signal b1 - b12, and one detector element per accuracy bit signal ia1, ia3 and ia6 to provide an absolute position signal 75 with twelve bit resolution, and the most stringent tolerance requirement will still be placed only on the least significant signal bit d1 and on the accuracy bit ia1. It is, however, within the scope of the invention to use push-pull technology to generate one or more bit signals. Push-pull technology means that a detector element generates the bit signal and a second detector element generates the inverse of the bit signal, whereupon these two signals are disposed to cooperate to create a bit signal with a better signal-noise ratio.

Figure 9

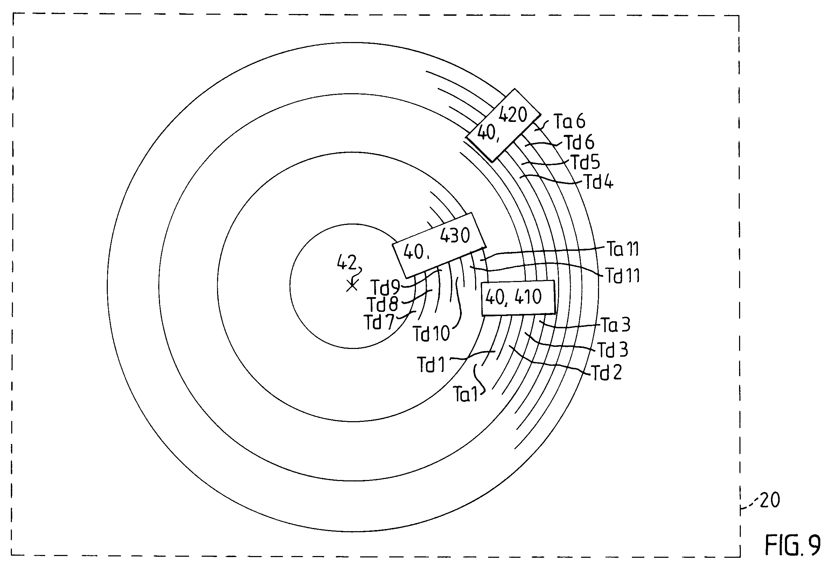

Figure 9 shows an embodiment of an encoder unit 20 comprising a detector means 40 and an encoder disc 30. The encoder disc 30 is provided with an absolute code pattern Td1 - Td11, and accessory code patterns Ta1, Ta3, Ta6 and Ta11. According to the embodiment shown in Figure 9, the bit tracks d4 - d6 and ia6 are arranged outermost on the encoder disc. The bit tracks d7 - d11 and ia11 are arranged closest to the center of the encoder disc, and the bit tracks d1 - d3 and ia1 and ia6 are arranged therebetween.

The pattern tracks can, as an alternative, be arranged so that the least significant bit tracks are closest to the center of the encoder disc and the most significant bit tracks are farther out from the center of rotation 42. According to one alternative embodiment of the invention, the pattern tracks on the code means can be arranged in reverse order, for example.

With reference to Figure 9, one embodiment is described wherein the code means 40 comprises three detector group 410, 420 and 430. The first detector group 410 can be arranged to read the measuring code bits d1, d2 and d3 and the accuracy code bits ia1 and ia3. The second detector group 420 can be arranged to read the measuring code bit d4, d5 and d6 and the accuracy code bit ia6. The third detector group 430 can be arranged to read the measuring code bits d7 - d11 and the accuracy code bit ia11.

By using the process described above for processing the bit signals d1 - d11 and ia1, ia3, ia6 and ia11, the various detector groups 410, 420 and 430 can read their respective bit pattern tracks with various degrees of inaccuracy, and still produce an absolute position signal 75 which indicates the angle of rotation of the encoder disc relative to a zero angle with the same inaccuracy as that with which the bit signals d1 and ia1 were read.

According to a second embodiment, the code means is provided with bit pattern tracks Td1, Td2, Td3, Td4, Td5, Td6, Td7, Td8, Td9, Td10 and Td11. Corresponding code signal bits d1 - d11 can be generated by reading off respective pattern tracks Td1 - Td11, as described above. The accuracy signals ia1, ia3, ia6 and ia11 can be generated by means of detector elements which read the bit pattern tracks Td1, Td3, Td6 and Td11. The detector element which reads the pattern Td1 and generates the bit signal ia1 can be mounted displaced relative to the detector element which reads the pattern Td1 and generates the bit signal d1 so that the accuracy bit signal ia1 will be phased 90° relative to the measuring code bit signal d1. This can be achieved by spacing the accuracy bit detector element for the accuracy bit signal ia1 a distance $N * \pi/2$ from the detector element which reads the pattern Td1 along the bit pattern track Td1, where N is ah odd integer. Correspondingly, the accuracy signal ia3 can be generated by reading the pattern track Td3 and so on.

Appendix 1

```
oa6  =      /d6 * /d5 * /d4 * /b3 *  oa3
        +    d6 * /d5 * /d4 * /b3 * /oa3
        +   ia6 *  d5
        +   ia6 *  d4
        +   ia6 *  b3


oa11=      /d11 * /d10 * /d9 * /d8* /d7 * /b6 *  oa6
        +   d11 * /d10 * /d9 * /d8* /d7 * /b6 * /oa6
        +  ia11* d10
        +  ia11* d9
        +  ia11* d8
        +  ia11* d7
        +  ia11* b6


b4  =      /ia6 * /d6 * /d5 * b3 *  oa3
        +  /ia6 * /d6 *  d5 * b3 * /oa3
        +  /ia6 *  d6 *  d5 * b3 *  oa3
        +  /ia6 *  d6 * /d5 * b3 * /oa3
        +   ia6 *  d6 * /d5 * b3 *  oa3
        +   ia6 *  d6 *  d5 * b3 * /oa3
        +   ia6 * /d6 *  d5 * b3 *  oa3
        +   ia6 * /d6 * /d5 * b3 * /oa3
        +  /b3 *  d4


b5  =      /ia6 * /d6 *  d4 * /b3 * /oa3
        +  /ia6 *  d6 *  d4 * /b3 *  oa3
        +   ia6 *  d6 *  d4 * /b3 * /oa3
        +   ia6 * /d6 *  d4 * /b3 *  oa3
        +   d5 * /d4
        +   d5 *  b3
```

Appendix 1 cont'd

```
b6 =        /ia6  *   d5  *  /d4  *  /b3  *  /oa3
      +    ia6  *   d5  *  /d4  *  /b3  *   oa3
      +     d6  *  /d5
      +     d6  *   d4
      +     d6  *   b3

b7 =  /ia11 *  /d11 *  /d10 *  /d9 *  /d8 *   b6 *   oa6
      +  /ia11 *  /d11 *  /d10 *   d9 *   d8 *   b6 *   oa6
      +  /ia11 *  /d11 *   d10 *   d9 *  /d8 *   b6 *   oa6
      +  /ia11 *  /d11 *   d10 *  /d9 *   d8 *   b6 *   oa6
      +  /ia11 *   d11 *   d10 *  /d9 *  /d8 *   b6 *   oa6
      +  /ia11 *   d11 *   d10 *   d9 *   d8 *   b6 *   oa6
      +  /ia11 *   d11 *  /d10 *   d9 *  /d8 *   b6 *   oa6
      +  /ia11 *   d11 *  /d10 *  /d9 *   d8 *   b6 *   oa6
      +   ia11 *   d11 *  /d10 *  /d9 *  /d8 *   b6 *   oa6
      +   ia11 *   d11 *  /d10 *   d9 *   d8 *   b6 *   oa6
      +   ia11 *   d11 *   d10 *   d9 *  /d8 *   b6 *   oa6
      +   ia11 *   d11 *   d10 *  /d9 *   d8 *   b6 *   oa6
      +   ia11 *  /d11 *   d10 *  /d9 *  /d8 *   b6 *   oa6
      +   ia11 *  /d11 *   d10 *   d9 *   d8 *   b6 *   oa6
      +   ia11 *  /d11 *  /d10 *   d9 *  /d8 *   b6 *   oa6
      +   ia11 *  /d11 *  /d10 *  /d9 *   d8 *   b6 *   oa6
      +   ia11 *  /d11 *  /d10 *  /d9 *  /d8 *   b6 *  /oa6
      +   ia11 *  /d11 *  /d10 *   d9 *   d8 *   b6 *  /oa6
      +   ia11 *  /d11 *   d10 *   d9 *  /d8 *   b6 *  /oa6
      +   ia11 *  /d11 *   d10 *  /d9 *   d8 *   b6 *  /oa6
      +   ia11 *   d11 *   d10 *  /d9 *  /d8 *   b6 *  /oa6
      +   ia11 *   d11 *   d10 *   d9 *   d8 *   b6 *  /oa6
      +   ia11 *   d11 *  /d10 *   d9 *  /d8 *   b6 *  /oa6
      +   ia11 *   d11 *  /d10 *  /d9 *   d8 *   b6 *  /oa6
      +  /ia11 *   d11 *  /d10 *  /d9 *  /d8 *   b6 *  /oa6
      +  /ia11 *   d11 *  /d10 *   d9 *   d8 *   b6 *  /oa6
      +  /ia11 *   d11 *   d10 *   d9 *  /d8 *   b6 *  /oa6
      +  /ia11 *   d11 *   d10 *  /d9 *   d8 *   b6 *  /oa6
      +  /ia11 *  /d11 *   d10 *  /d9 *  /d8 *   b6 *  /oa6
      +  /ia11 *  /d11 *   d10 *   d9 *   d8 *   b6 *  /oa6
      +  /ia11 *  /d11 *  /d10 *   d9 *  /d8 *   b6 *  /oa6
      +  /ia11 *  /d11 *  /d10 *  /d9 *   d8 *   b6 *  /oa6
      +   d7  *  /b6
```

Appendix 1 cont'd

```
b8 =  /ia11 * /d11 * /d10 * /d9 *  d7 * /b6 * /oa6
    + /ia11 * /d11 * /d10 *  d9 *  d7 * /b6 *  oa6
    + /ia11 * /d11 *  d10 *  d9 *  d7 * /b6 * /oa6
    + /ia11 * /d11 *  d10 * /d9 *  d7 * /b6 *  oa6
    + /ia11 *  d11 *  d10 * /d9 *  d7 * /b6 * /oa6
    + /ia11 *  d11 *  d10 *  d9 *  d7 * /b6 *  oa6
    + /ia11 *  d11 * /d10 *  d9 *  d7 * /b6 * /oa6
    + /ia11 *  d11 * /d10 * /d9 *  d7 * /b6 *  oa6
    +  ia11 *  d11 * /d10 * /d9 *  d7 * /b6 * /oa6
    +  ia11 *  d11 * /d10 *  d9 *  d7 * /b6 *  oa6
    +  ia11 *  d11 *  d10 *  d9 *  d7 * /b6 * /oa6
    +  ia11 *  d11 *  d10 * /d9 *  d7 * /b6 *  oa6
    +  ia11 * /d11 *  d10 * /d9 *  d7 * /b6 * /oa6
    +  ia11 * /d11 *  d10 *  d9 *  d7 * /b6 *  oa6
    +  ia11 * /d11 * /d10 *  d9 *  d7 * /b6 * /oa6
    +  ia11 * /d11 * /d10 * /d9 *  d7 * /b6 *  oa6
    +  d8   * /d7
    +  d8   *  b6


b9 =  /ia11 * /d11 * /d10 *  d8 * /d7 * /b6 * /oa6
    + /ia11 * /d11 *  d10 *  d8 * /d7 * /b6 *  oa6
    + /ia11 *  d11 *  d10 *  d8 * /d7 * /b6 * /oa6
    + /ia11 *  d11 * /d10 *  d8 * /d7 * /b6 *  oa6
    +  ia11 *  d11 * /d10 *  d8 * /d7 * /b6 * /oa6
    +  ia11 *  d11 *  d10 *  d8 * /d7 * /b6 *  oa6
    +  ia11 * /d11 *  d10 *  d8 * /d7 * /b6 * /oa6
    +  ia11 * /d11 * /d10 *  d8 * /d7 * /b6 *  oa6
    +  d9   * /d8
    +  d9   *  d7
    +  d9   *  b6
```

Appendix 1 cont'd

```
b10 = /ia11 * /d11 *  d9 * /d8 * /d7 * /b6 * /oa6
     + /ia11 *  d11 *  d9 * /d8 * /d7 * /b6 *  oa6
     +  ia11 *  d11 *  d9 * /d8 * /d7 * /b6 * /oa6
     +  ia11 * /d11 *  d9 * /d8 * /d7 */b6 *  oa6
     +  d10  * /d9
     +  d10  *  d8
     +  d10  *  d7
     +  d10  *  b6


b11 = /ia11 *  d10 * /d9 * /d8 * /d7 * /b6 * /oa6
     +  ia11 *  d10 * /d9 * /d8 * /d7 * /b6 *  oa6
     +  d11 * /d10
     +  d11 *  d9
     +  d11 *  d8
     +  d11 *  d7
     +  d11 *  b6


b12 = oa11
```

## Claims

1. Process in an encoder unit comprising a code means (30) provided with a pattern, and a detector means (40), said detector means (40) and code means (30) being displaceable relative to each other, said process comprising the step of generating a measurement code signal (84,d1-d12) indicating the position of the code means (30) relative to the detector means (40) with a certain inaccuracy, **characterized** by the following steps:
reading at least one bit track (Ta1;Td1) disposed on the code means (30) and generating an accessory code signal (86) comprising at least one accuracy bit signal (ia1) with a first significance, signal edges for the accessory code signal (86,ia1,ia3,ia6) occurring approximately at the same positions as the signal edges of bit signals (d2-d12) in the measurement code signal (84,d1-d12);
combining the measurement code signal (84) and the accessory code signal (86) and thereby achieving a code signal (45;84, 96) with an accuracy redundancy;
generating, as a function of the code signal (45), an absolute position signal (75,b1-b12) which indicates the absolute position of the code means relative to the detector means (40).

2. Process according to Claim 1, **characterized** by:
the measurement code signal (84,d1-d12) indicating the position of the code means (30) relative to the detector means (40) with a first inaccuracy (L6); and
the accessory code signal (86,ia1,ia3,ia6) indicating the position of the bit signal edges with a second inaccuracy ($\alpha$) ;
generating the absolute position signal (75,b1-b12) depending on the measurement code signal (84,d1-d11) and the accessory code signal (86,ia1,ia3,ia6) while indicating the absolute position of the code means (30) relative to the detector means (40) with the second inaccuracy ($\alpha$), said second inaccuracy ($\alpha$) being less than the first inaccuracy (L6).

3. Process according to Claim 1 or 2, **characterized** by:

generating the absolute position signal (75,b1-b12) by a logic means (70) by means of a predetermined logical processing of the measurement code signal (84,d1-d12) in combination with the accessory code signal (86;ia1,ia3,ia6), said measurement code signal (84,d1-d12) being a Gray-coded signal.

4. Process according to Claim 1, 2 or 3, **characterized** in that each measurement code bit signal (d1-d11) is generated by a measurement code bit element by reading measurement bit pattern tracks (Td1-Td11) disposed on the encoder disc; and
that an accuracy bit signal (ia1,ia3,ia6,ia11) with a significance n is generated by an accessory code bit detector element by reading corresponding measurement bit pattern tracks (Td1,Td3,Td6,Td11), the accessory code bit detector element for the significance n being displaced relative to the measurement code bit detector element for the significance n so that each accuracy bit signal (ia1,ia3,ia6,ia11) is generated phased essentially 90° relative to the measurement bit code signal (d1,d3,d6,d11) which has the same significance.

5. Process according to Claim 1, 2 or 3, **characterized** in that the measurement code signal (84,d1-d11) is generated by reading measurement bit pattern tracks (Td1-Td11) arranged on the encoder disc; and
that the accuracy bit signals (ia1,ia3,ia6,ia11) in the accessory code signal (86;ia1,ia3,ia6,ia11) are generated by reading accuracy bit pattern tracks (Ta1,Ta3,Ta6,Ta11) arranged on the encoder disc, an accuracy bit pattern track (Tan) with a division corresponding to a significance n being displaced relative to a measurement bit pattern track (Tdn) with a division corresponding to the significance n, so that the accuracy bit signal (ian) is generated phased essentially 90° relative to the measurement bit code signal (dn).

6. Encoder unit comprising a code means (30) provided with a pattern, and a detector means (40), said detector means (40) and code means (30) being displaceable relative to each other and said detector means (40) being disposed to read the pattern on the code means (30) and provide a measurement code signal (84) indicating the position of the code means (30) relative to the detector means (40) with a certain inaccuracy, **characterized** in
that the detector means is arranged, in addition to generating said measurement code signal, to generate an accessory code signal (86) comprising at least one accuracy bit signal (ia1) with a first significance, signal edges for the accessory code signal (86,ia1,ia3,ia6) occurring approximately in the same positions as signal edges of bit signals (d2-d12) in the measurement code signal (84,d1-d12); and
that the detector means is arranged to combine the measurement code signal (84) and the accessory code signal (86) and thus achieve a code signal (45;84,86) with an accuracy redundancy, and deliver the code signal (45;84,86) to a signal processing means (70);
that the signal processing means (70) is arranged to generate, as a function of the code signal (45), an absolute position signal (75,b1-b12) which indicates the absolute position of the code means relative to the detector means (40).

7. Encoder unit according to Claim 6, **characterized** in that the measurement code signal (84,d1-d12) indicates the position of the code means (30) relative to the detector means (40) with a first inaccuracy (L6); and
that the accessory code signal (86,ia1,ia3,ia6) indicates the position of the bit signal edges with a second inaccuracy ($\alpha$) ;
that the signal processing means (70) is arranged to generate the absolute position signal (75,b1-b12), as a function of the measurement code signal (84,d1-d12) and the accessory code signal (86,ia1,ia3,ia6), so that the absolute position signal (75,b1-b12) indicates the absolute position of the code means (30) relative to the detector means (40) with the second inaccuracy ($\alpha$), the second inaccuracy ($\alpha$) being less than the first inaccuracy (L6).

8. Encoder unit according to Claim 6 or 7, **characterized** in that the measurement code signal (84,d1-d12) comprises a first measurement bit signal (d1;d3;d6) with a first significance;
that the accessory code signal (86) comprises a first accuracy bit signal (ia1;ia3;ia6) with the same resolution as the first measurement bit signal (d1;d3;d6);
that the absolute position signal (75) comprises a first position bit signal (b1;b3;b6) with the first significance and a second position bit signal (b2;b4;b7) with a second significance, said second significance being higher than the first significance; and
that the signal processing means is arranged to change the logical value of the second position bit signal (b2;b4;b7) as a function of selected changes in the first accuracy bit signal (ia1;ia3;ia6) so that the value of the second position bit signal (b2;b4;b7) has the same positional inaccuracy ($\alpha$) as the value of the first accuracy signal bit (ia1).

9. Encoder unit according to Claim 8, **characterized** in that the measurement code signal (84) comprises a second measurement signal bit (d3) with a third significance, said third significance being higher than the second significance;
that the accuracy signal (86) comprises a second accuracy signal bit (oa3) with the same resolution as the second measurement signal bit (d3); and
that changes in the logical value of the second accuracy signal bit (oa3) are generated depending on selected changes in the first accuracy bit signal (ia1), so that the value of the second accuracy bit signal (oa3) has the same positional inaccuracy as the value of the first accuracy signal bit (ia1,oa1).

10. Encoder unit according to Claim 6, 7, 8 or 9, **characterized** in that the value of the least significant bit (b1) of the absolute position signal (75) agrees with the value of the least significant bit (d1) of the first measurement code signal (84);
that changes in the logical value of the next to the least significant bit (b2) in the absolute position signal (75, b1-b12) are generated as a function of selected changes in the first accuracy signal bit (ia1).

11. Encoder unit according to one of Claims 6 - 10, **characterized** in that the pattern of the code means is disposed so that the measurement code signal (84, d1-d11) is Gray-coded.

12. Encoder unit according to Claim 6, 7, 8, 9, 10 or 11, **characterized** in that the detector means (40) comprises a first measurement detector element (310,410) which is arranged to generate the first measurement signal bit (d1) as a function of the first measurement bit pattern track (320;Td1-Td11) ;
that at least a first accuracy bit detector element is arranged to read at least a selected measurement bit pattern track (Td1,Td3,Td6) on the encoder disc, said accuracy bit detector element being arranged displaced along the pattern track relative to the measurement code bit detector element, and that each accuracy bit detector element is arranged to generate an individual accuracy bit signal (ia1,ia3,ia6,ia11) phased essentially 90° relative to the measurement bit code signal (d1,d3,d6,d11) which has the same significance.

13. Encoder unit according to Claim 6, 7, 8, 9, 10 or 11, **characterized** in that the code means (30) comprises a first measurement bit pattern track (Td1,Td3,Td6); that the detector means (40) comprises a first measurement detector element (310,410) which is disposed to generate the first measurement signal bit (d1) as a function of the first measurement bit pattern track (320;Td1-Td11);
that the code means (30) comprises a first accuracy pattern track (Ta1,Ta3,Ta6);
that the detector means (40) comprises a first accuracy detector element (310), which is arranged to read the first accuracy pattern track (Ta1,Ta3,Ta6) and generate the first accuracy signal bit (ia1,ia3,ia6); and
that the first accuracy pattern track (Ta1,Ta3,Ta6) has the same division as the first measurement bit pattern track (d1,d3,d6), said first accuracy pattern track (Ta1,Ta3,Ta6) being displaced relative to the first measurement bit pattern track (d1,d3,d6).

14. Encoder unit according to Claim 13, **characterized** in that the distance between two adjacent edges of the first accuracy pattern track (Ta1) agrees with the distance between two adjacent edges of the first measurement bit pattern track (Td1), one edge of the first accuracy pattern track (Ta1) being arranged, in the position-measuring direction, essentially midway between two edges of the first bit pattern group (Td1);
that the edge positions of the first accuracy pattern group (Ta1) essentially agree with the edge positions of pattern groups (Td2-Td11) with higher significance than the first bit pattern group (Td1).

15. Encoder unit according to Claim 12 or 13, **characterized** in that the first measurement detector element is arranged to read the first measurement bit pattern track and generate the first measurement signal bit (d1) with the second inaccuracy ($\alpha$), and to deliver the first measurement signal bit (d1) to the signal processing means (70);
that the first accuracy detector element is arranged to generate the first accuracy signal bit (ia1) with the second inaccuracy ($\alpha$), and to deliver the first accuracy signal bit (ia1) to the signal processing means (70);
that the detector means (40) is arranged to generate additional measurement bit signals (d2-d12) and additional accuracy signals (ia3,ia6) with an inaccuracy (L1,L3,L6) which can be greater than the first inaccuracy ($\alpha$) ;

that the signal processing means (70) is arranged, by means of logical operations on the first measurement code bit value, the first accuracy bit value and the additional measurement code bit values (d2-d11), to generate additional absolute position signal bits (b2-b12) which correspond in significance to the additional measurement code values (d2-d11), the edges of the additional absolute position signal bits (b2-b12) being directly dependent on the edges of the first accuracy bit value (ia1) so that the absolute position signal (75,b1-b12) indicates the absolute position of the code means (30) relative to the detector means (40) with the first inaccuracy ($\alpha$)

16. Encoder unit according to one of Claims 6 - 15, **characterized** in that the code means is an encoder disc and the encoder unit (10) is an absolute angle encoder unit.

FIG. 1

FIG. 2

FIG.3

FIG.4

FIG.5A

208

70

d1=b1

ia1 = oa1

ia11=d12

oa3
oa6
oa11

b3
b6

oa3
oa6

d1 d2 d3 d4 d5 d6 d7 d8 d9 d10 d11

ia1 ia3 ia6 ia11

b1 b2 b3 b4 b5 b6 b7 b8 b9 b10 b11 b12

EP 0 654 652 A1

FIG.5B

EP 0 654 652 A1

FIG.6

FIG. 7

FIG. 8

EP 0 654 652 A1

FIG. 9

FIG.10

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.6) |
|---|---|---|---|
| X | US, A, 5214426 (KIYOMI MINOHARA ET AL), 25 May 1993 (25.05.93) * abstract * | 1,6 | G01B 11/26 |
| A | | 2-5, 7-16 | |
| | -- | | |
| X | US, A, 4786891 (TOSHITSUGU UEDA ET AL), 22 November 1988 (22.11.88) * abstract * | 1,6 | |
| A | | 2-5, 7-16 | |
| | -- | | |
| X | US, A, 4933673 (KOH ISHIZUKA ET AL), 12 June 1990 (12.06.90) * abstract * | 1,6 | |
| | | | **TECHNICAL FIELDS SEARCHED (Int. Cl.6)** |
| A | | 2-5, 7-16 | G01B |
| | -- | | |
| A | Derwent's abstract, No 87-233561/33, week 8733, ABSTRACT OF SU, A, 1280315 (TEXTILE ENG RES INS), 30 December 1986 (30.12.86) | 1-16 | |
| | ----- | | |

| The present search report has been drawn up for all claims | | |
|---|---|---|
| Place of search | Date of completion of the search | Examiner |
| STOCKHOLM | 20 January 1995 | BENGTSSON RUNE |

CATEGORY OF CITED DOCUMENTS

X : particularly relevant if taken alone
Y : particularly relevant if combined with another document of the same category
A : technological background
O : non-written disclosure
P : intermidiate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)